(19) Europäisches Patentamt
European Patent Office
Office européen des brevets

(11) **EP 1 810 913 A1**

(12) **EUROPÄISCHE PATENTANMELDUNG**

(43) Veröffentlichungstag:
**25.07.2007 Patentblatt 2007/30**

(51) Int Cl.:
**B62D 13/06** *(2006.01)*

(21) Anmeldenummer: **06126100.4**

(22) Anmeldetag: **14.12.2006**

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **18.01.2006 DE 102006002294**

(71) Anmelder: **ZF-Lenksysteme GmbH**
**73527 Schwäbisch Gmünd (DE)**

(72) Erfinder:
• **Reinelt, Wolfgang**
**70374 Stuttgart (DE)**
• **Lundquist, Christian**
**73525 Schwäbisch Gmünd (DE)**

(54) **Verfahren zur Unterstützung des Fahrers eines Kraftfahrzeugs im Anhängerbetrieb bei der Rückwärtsfahrt**

(57)    Die Erfindung betrifft ein Verfahren zur Unterstützung des Fahrers eines Kraftfahrzeugs (13) im Anhängerbetrieb bei der Rückwärtsfahrt, wobei das Kraftfahrzeug (13) ein elektronisch geregeltes Servolenksystem mit einer Lenkhandhabe zur Vorgabe eines Lenkradwinkels als Maß für einen gewünschten Lenkwinkel für wenigstens ein lenkbares Rad des Kraftfahrzeugs (13) aufweist. Während der Rückwärtsfahrt wird aus dem aktuell vorgegebenen Lenkradwinkel als Referenzsignal entsprechend einer gewünschten Fahrtrichtung des Fahrers ein zugehöriger Lenkwinkel für das wenigstens eine lenkbare Rad unter Berücksichtigung eines Modells für den Anhängerbetrieb fortlaufend geregelt und über das elektronisch geregelte Servolenksystem unabhängig von dem Fahrer eingestellt.

Fig. 2

**Beschreibung**

Die Erfindung betrifft ein Verfahren zur Unterstützung des Fahrers eines Kraftfahrzeugs im Anhängerbetrieb bei der Rückwärtsfahrt, wobei das Kraftfahrzeug ein elektronisch geregeltes Servolenksystem mit einer Lenkhandhabe zur Vorgabe eines Lenkradwinkels als Maß für einen gewünschten Lenkwinkel für wenigstens ein lenkbares Rad des Kraftfahrzeugs aufweist. Die Erfindung betrifft des weiteren ein Computerprogramm und ein Computerprogrammprodukt mit Programmcodemitteln, um das Verfahren durchzuführen sowie ein Überlagerungslenksystem.

Bekanntlich ist eine Rückwärtsfahrt mit einem Anhänger, insbesondere für einen ungeübten Fahrer schwierig. Oft werden mehrere Anläufe für ein durchzuführendes Fahrmanöver benötigt.

Aus der DE 103 36 985 A1 ist ein Verfahren zur Unterstützung des Fahrers bei Fahrmanövern, wie z. B. Park- oder Rangiermanövern bekannt. Dabei wird eine Referenztrajektorie bestimmt, entlang der das Fahrzeug bewegt werden soll. Dem Fahrer wird während des Fahrmanövers eine einzustellende, das Fahrzeug entlang der Referenztrajektorie steuernde Lenkradstellung angegeben. Eine Lenkwinkelabweichung zwischen dem vom Fahrer tatsächlich eingestellten Ist-Winkel und dem der angeforderten Lenkradstellung entsprechenden Soll-Winkel wird vom Fahrer unabhängig korrigiert. Die Korrektur wird über Stellmittel einer Servolenkungsvorrichtung, sowie über den Antrieb und die Bremse des Kraftfahrzeugs eingestellt. Der Fahrer kann ebenfalls im Anhängerbetrieb mit angehängtem Anhänger beim Rückwärtsfahren unterstützt werden. Die Unterstützung erfolgt ebenfalls entlang einer zuvor bestimmten Referenztrajektorie.

Der vorliegenden Erfindung liegt die Aufgabe zugrunde, ein Verfahren der eingangs erwähnten Art zu schaffen, welches ein Rückwärtsfahren eines Kraftfahrzeugs mit einem Anhänger für den Fahrer weiter vereinfacht und welches insbesondere unabhängig von einer vorzugebenden Referenztrajektorie ist.

Diese Aufgabe wird erfindungsgemäß durch die in Anspruch 1 genannten Merkmale gelöst.

Durch das erfindungsgemäße Verfahren wird in einfacher und vorteilhafter Weise eine Assistenzfunktion bereitgestellt, welche das Rückwärtsfahren mit Anhänger weiter vereinfacht. Die Assistenzfunktion beeinflusst dabei ein elektronisch geregeltes Servolenksystem, wie beispielsweise ein Überlagerungslenksystem (Active Front Steering bzw. AFS), ein EPS-Lenksystem (Electric Power Steering), ein Steer by Wire-Lenksystem, einen Handmomentensteller oder eine sinnvolle Kombination aus den vorstehend genannten Servolenksystemen. Der Fahrer gibt mit der Lenkhandhabe bzw. dem Lenkrad die gewünschte Fahrtrichtung vor. Daraus bestimmt das erfindungsgemäße Verfahren den passenden Vorderradwinkel und übergibt diesen dem elektronisch geregelten Servolenksystem als Vorgabe. Erfindungsgemäß wird während der Rückwärtsfahrt aus dem aktuell vorgegebenen Lenkradwinkel als Referenzsignal entsprechend einer gewünschten Fahrtrichtung des Fahrers ein zugehöriger Lenkwinkel für das wenigstens eine lenkbare Rad des Kraftfahrzeugs, insbesondere Personenkraftwagens unter Berücksichtigung eines Modells für den Anhänger fortlaufend geregelt und über das elektronisch geregelte Servolenksystem unabhängig von dem Fahrer eingestellt.

Das elektronisch geregelte Servolenksystem weist vorzugsweise Überlagerungsmittel auf, über welche der zugehörige Lenkwinkel des wenigstens einen lenkbaren Rads eingestellt wird.

Vorteilhaft ist es, wenn als Referenzsignal ein durch einen Faktor oder eine Funktion modifizierter Lenkradwinkel verwendet wird.

Dadurch kann das Verhältnis von Referenzsignal und Lenkradwinkeleinstellung des Fahrers genau festgelegt werden. In Frage kommt eine Modifikation des Lenkradwinkels über eine Funktion, ein Kennfeld oder durch einfache Multiplikation mit einer Konstanten. Mit Hilfe der Größe dieser Konstanten kann z. B. bestimmt werden, ob direkter oder indirekter eingegriffen wird.

Erfindungsgemäß kann ferner vorgesehen sein, dass als Regelgröße der Winkel zwischen der Längsachse des Anhängers und der Längsachse des Kraftfahrzeugs verwendet wird, und dass der Winkel zwischen der Längsachse des Anhängers und der Längsachse des Kraftfahrzeugs kontinuierlich mittels eines Sensors erfasst wird. Der Winkel zwischen Anhänger und Zugmaschine bzw. Kraftfahrzeug kann an der Anhängerkupplung gemessen bzw. erfasst werden und wird im Regelkreis mit dem gewünschten Referenzsignal verglichen.

Alternativ kann als Regelgröße auch der Fahrradius bzw. eine Regelung der Position des Anhängers im Raum verwendet werden.

Vorteilhaft ist es, wenn eine Kaskadenregelung verwendet wird.

Durch den Einsatz mehrerer Regler in Folge können unterschiedliche Reglerkonstellationen gebildet werden.

Sehr vorteilhaft ist es, wenn die Regelung hinsichtlich einer Rückkopplung auf die Lenkhandhabe optimiert wird.

Da der Lenkradwinkel das Referenzsignal darstellt, ergibt sich bei einem Eingriff des elektronisch geregelten Servolenksystems eine Rückkopplung auf die Lenkhandhabe bzw. das Lenkrad, falls nur ein Aktuator isoliert verwendet wird. Dies äußert sich in für den Fahrer spürbaren Momenten am Lenkrad. Des weiteren kann das System unter gewissen Bedingungen instabil werden, da die Lenkhandhabe selbst die Wunschvorgabe des Fahrers an das System darstellt.

Wenn die Regelung hinsichtlich der Rückkopplung auf die Lenkhandhabe optimiert wird, also eine optimale Regelung durchgeführt wird, versucht der Regler, nicht nur die Differenz zwischen dem gewünschten Referenzsignal und dem gemessenen Signal zu minimieren, sondern auch gleichzeitig die Rückkopplung auf das Lenkrad zu minimieren und dadurch dass System stabil zu halten. Die zu regelnde Differenz kann sich hier auf den Winkel zwischen Anhänger und Kraftfahrzeug oder auf den Fahrradius beziehen.

Erfindungsgemäß kann ferner vorgesehen sein, dass zur Reduzierung einer Rückkopplung auf die Lenkhandhabe ein Filter, insbesondere ein Tiefpassfilter auf das Referenzsignal angewendet wird.

Sonach kann die Winkelgeschwindigkeit des Lenkradwinkelmesssignals reduziert werden, um das Lenkradmoment zu begrenzen und die Rückkopplung zu reduzieren.

Um die Rückkopplung weiter zu reduzieren, kann auch ein Teil des elektronisch geregelten Servolenksystems bzw. bei Vorhandensein mehrerer Lenkaktuatoren bei dem elektronisch geregelten Servolenksystem wenigstens einer der Lenkaktuatoren eingesetzt werden. Beispielsweise kann bei einer Kombination aus einem Überlagerungslenksystem und einem EPS-Lenksystem oder einem Handmomentensteller bzw. bei Einsatz eines Steer by Wire-Lenksystems der Einfluss der Winkelüberlagerung vollständig beseitigt werden. Das EPS-Lenksystem lenkt hierbei die Räder, während das Überlagerungslenksystem den Winkelausgleich herstellt.

Vorteilhaft ist es, wenn zusätzlich die Kraft und/oder das Moment im Bereich der Anhängerkupplung, insbesondere mittels eines Sensors, erfasst und in der Regelung berücksichtigt werden. Dabei kann auch ein Zustandsregler verwendet werden.

Durch das Messen der Kraft und/oder des Moments in der Anhängerkupplung können die Regelungsstrategien dementsprechend erweitert werden (beispielsweise über Zustandsregler). Des weiteren kann durch die erweiterte Kraftmessung das Fahren gegen Hindernisse, wie beispielsweise andere Fahrzeuge oder Bordsteinkanten, erfasst werden. Diese Information kann in der Assistenzfunktion dazu genutzt werden, das Hindernis zu umfahren oder dieses dem Fahrer mittels einer Warnlampe oder einem Warnsignal anzuzeigen. Die Krafterkennung kann in den Regelungsstrategien auch als Information eines Bergauf- oder Bergabfahrens genutzt werden. Durch die Erfassung der Zugkraft an der Anhängerkupplung kann der Fahrer über eine eventuelle Überladung des Anhängers oder eine für die Zugmaschine zu große Anhängerlast informiert werden. Durch die Erfassung der Zugkraft kann der Radschlupf des Anhängers geschätzt und ein realitätsgetreueres Fahrzeugmodell bzw. Modell für den Anhängerbetrieb eingesetzt werden.

Das erfindungsgemäße Verfahren ist beim Rückwärtsfahren aktiv. Die Aktivierung kann z. B. über die Erfassung des Einlegens des Rückwärtsgangs erfolgen (z. B. über die CAN-Schnittstelle).

Das erfindungsgemäße Verfahren zur Unterstützung des Fahrers eines Kraftfahrzeugs im Anhängerbetrieb bei der Rückwärtsfahrt ist vorzugsweise als Computerprogramm auf dem Steuergerät des elektronisch geregelten Servolenksystems bzw. des Überlagerungslenksystems realisiert, wobei auch andere Lösungen selbstverständlich in Frage kommen. Dazu ist das Computerprogramm in einem Speicherelement des Steuergeräts gespeichert. Durch Abarbeitung auf eine Mikroprozessor des Steuergeräts wird das Verfahren ausgeführt. Das Computerprogramm kann auf einem computerlesbaren Datenträger (Diskette, CD, DVD, Festplatte, USB-Memory Stick, oder dergleichen) oder einem Internetserver als Computerprogrammprodukt gespeichert sein und von dort aus in das Speicherelement des Steuergeräts übertragen werden. Ein derartiges Computerprogramm bzw. Computerprogrammprodukt mit Programmcodemitteln ist in Anspruch 12 bzw. 13 angegeben.

Anspruch 14 betrifft ein Überlagerungslenksystem eines Kraftfahrzeugs.

Nachfolgend ist anhand der Zeichnung prinzipmäßig ein Ausführungsbeispiel der Erfindung angegeben.

Es zeigt:

1. eine schematische Darstellung eines Überlagerungslenksystems; und

2. eine schematische Darstellung eines Kraftfahrzeugs mit einem Anhänger bzw. eines Gespanns.

Nachfolgend wird das erfindungsgemäße Verfahren zur Unterstützung des Fahrers eines Kraftfahrzeugs im Anhängerbetrieb bei der Rückwärtsfahrt mit Hilfe eines Überlagerungslenksystems (Active Front Steering / AFS) ausgeführt. In weiteren Ausführungsbeispielen könnte es selbstverständlich auch durch ein anderes elektronisch geregeltes Servolenksystem, wie beispielsweise ein EPS-Lenksystem (Electric Power Steering), ein Steer / Drive by Wire-Lenksystem, einen Handmomentensteller oder eine entsprechende Systemkombination, sowie durch ein übergeordnetes Fahrzeugsystem ausgeführt werden.

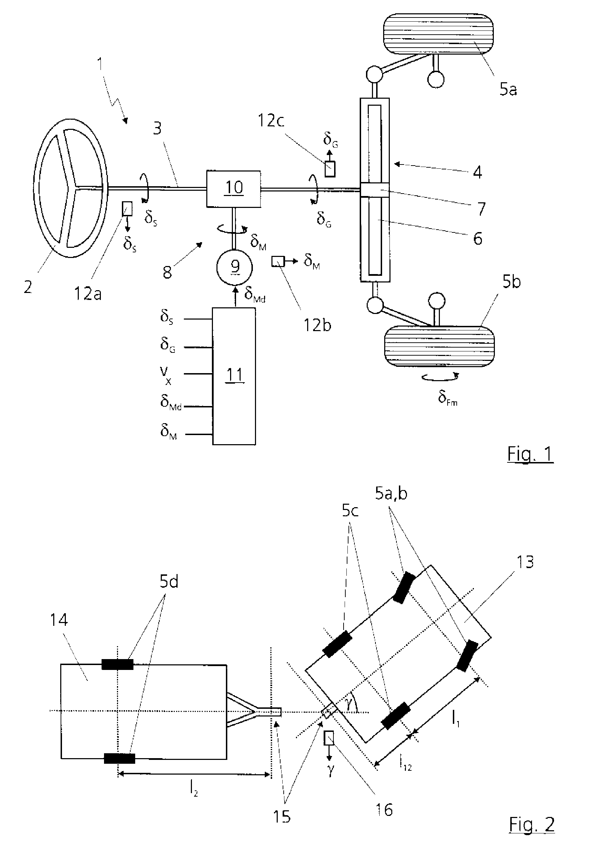

In Fig. 1 ist als elektronisch geregeltes Servolenksystem ein Überlagerungslenksystem 1 eines Kraftfahrzeugs 13 (siehe Fig. 2) dargestellt. Das Überlagerungslenksystem 1 weist eine als Lenkrad 2 ausgebildete Lenkhandhabe auf. Das Lenkrad 2 ist über eine Gelenkwelle 3 mit einem Lenkgetriebe 4 verbunden. Das Lenkgetriebe 4 dient dazu, einen Drehwinkel der Gelenkwelle 3 in einen Lenkwinkel $\delta_{Fm}$ von lenkbaren Rädern 5a, 5b des Kraftfahrzeugs 13 umzusetzen. Das Lenkgetriebe 4 weist eine Zahnstange 6 und ein Ritzel 7 auf, an welches die Gelenkwelle 3 angreift. Das Überlagerungslenksystem 1 umfasst darüber hinaus Überlagerungsmittel 8, die einen als Elektromotor 9 ausgebildeten Stellantrieb bzw. Überlagerungswinkelsteller und ein von diesem angetriebenes Überlagerungsgetriebe 10 aufweisen. Das Überlagerungsgetriebe 10 ist als Planetengetriebe ausgebildet. In weiteren Ausführungsbeispielen könnte das Überlagerungsgetriebe 10 auch als Wellgetriebe oder dergleichen ausgebildet sein. Durch das Lenkrad 2 wird ein Lenkradwinkel $\delta_S$ als Maß für einen gewünschten Lenkwinkel $\delta_{Fm}$ der lenkbaren Räder 5a, 5b des Kraftfahrzeugs 13 vorgegeben. Mit Hilfe des Elektromotors 9 wird dann ein Überlagerungswinkel bzw. Stellwinkel $\delta_M$ generiert und durch das Überlagerungsgetriebe 10 mit dem Lenkradwinkel $\delta_S$ überlagert. Der Stellwinkel $\delta_M$ wird grundsätzlich zur Verbesserung der Fahrdynamik des Kraftfahrzeugs 13 bzw. des Komforts erzeugt. Die Summe aus Lenkradwinkel $\delta_S$ und Stellwinkel $\delta_M$ ergibt den Eingangswinkel des Lenkgetriebes 4 bzw. im vorliegenden Ausführungsbeispiel den Ritzelwinkel $\delta_G$.

Den Überlagerungsmitteln 8 nachgeordnet könnte das

Überlagerungslenksystem 1 in einem weiteren nicht dargestellten Ausführungsbeispiel zusätzlich einen Servoantrieb als weiteren Lenkaktuator aufweisen, welcher insbesondere der variablen Momentenunterstützung dient.

Das Überlagerungslenksystem 1 weist ein elektronisches Steuergerät 11 auf, welches unter anderem zur Regelung des Stellwinkels $\delta_M$ und des abgegebenen Moments des Elektromotors 9 dient. Auf dem elektronischen Steuergerät 11 läuft dazu ein Regelungsverfahren ab, welches als Regelungsstruktur bzw. als Computerprogramm auf einem nicht dargestellten Mikroprozessor des Steuergeräts 11 ausgeführt ist. Der Elektromotor 9 wird mit einem elektrischen Ansteuersignal $\delta_{Md}$, welches dem Sollwert des von dem Elektromotor 9 zu erzeugenden Stellwinkels $\delta_M$ entspricht, angesteuert. Die Ansteuerung bzw. Regelung des Elektromotors 9 erfolgt vorzugsweise in Abhängigkeit von der Fahrzeuggeschwindigkeit $V_x$ des Kraftfahrzeugs 13, d. h. das Übersetzungsverhältnis zwischen dem Lenkradwinkel $\delta_S$ und dem Ritzelwinkel $\delta_G$ bzw. dem Lenkwinkel $\delta_{Fm}$ der Räder 5a, 5b wird durch die Überlagerung des Lenkwinkels $\delta_S$ mit verschiedenen, geschwindigkeitsabhängigen Stellwinkeln $\delta_M$ in Abhängigkeit von der Fahrzeuggeschwindigkeit $V_x$ eingestellt. Dadurch ist es beispielsweise möglich, bei niedrigen Fahrzeuggeschwindigkeiten $V_x$ ein relativ kleines Übersetzungsverhältnis vorzugeben, bei welchem eine relativ geringe Drehung des Lenkrads 2 zu einem relativ großen Lenkwinkel $\delta_{Fm}$ der Räder 5a, 5b führt. Ebenso ist es bei einer hohen Fahrzeuggeschwindigkeit $V_x$ aus Stabilitätsgründen denkbar, ein relativ großes Übersetzungsverhältnis vorzugeben. Diese Abhängigkeit von der Fahrzeuggeschwindigkeit $V_x$ ist jedoch rein optional.

Damit die vorstehend angeführten Steuerungs- bzw. Regelungsfunktionen ausgeführt werden können, erhält das Steuergerät 11 als Eingangssignal die aktuelle Fahrzeuggeschwindigkeit $V_x$ (z. B. über den CAN-Bus des Kraftfahrzeugs). Außerdem weist das Überlagerungslenksystem 1 Sensoren 12a, 12b, 12c auf, welche den Lenkradwinkel $\delta_S$, den Stellwinkel $\delta_M$ und den Ritzelwinkel $\delta_G$ messen bzw. äquivalente Signale liefern, aus denen diese Winkel $\delta_S$, $\delta_M$, $\delta_G$ bestimmt werden können. Wie in Fig. 1 angedeutet, wird das Steuergerät 11 über die Sensoren 12a, 12b, 12c und andere nicht dargestellte Fahrzeugsysteme unter anderem mit den Eingangssignalen Lenkradwinkel $\delta_S$, Ritzelwinkel $\delta_G$, Stellwinkel $\delta_M$ und Sollwert des Stellwinkels $\delta_{Md}$ (z. B. als Vorgabe von anderen Fahrdynamiksystemen) versorgt. Alternativ oder zusätzlich könnten mehrere dieser Größen auch anhand der anderen oder weiterer Eingangsgrößen (z. B. Raddrehzahlen, usw.) insbesondere mit Hilfe geeigneter Modelle berechnet werden.

In Fig. 2 ist ein Gespann bestehend aus dem Kraftfahrzeug 13 als Zugmaschine und einem Anhänger 14 schematisch dargestellt. Die Hinterräder des Kraftfahrzeugs 13 sind mit dem Bezugszeichen 5c und die Räder des Anhängers 14 mit dem Bezugszeichen 5d versehen. Der Winkel zwischen der Längsachse des Anhängers 14 und der Längsachse des Kraftfahrzeugs 13 ist mit $\gamma$ bezeichnet.

Das erfindungsgemäße Verfahren zur Unterstützung des Fahrers des Kraftfahrzeugs 13 mit dem Anhänger 14 bei der Rückwärtsfahrt ist als Computerprogramm auf dem Steuergerät 11 des Überlagerungslenksystems 1 realisiert. Dabei wird während der Rückwärtsfahrt aus dem aktuell vorgegebenen Lenkradwinkel $\delta_S$ als Referenzsignal entsprechend einer gewünschten Fahrtrichtung des Fahrers ein zugehöriger Lenkwinkel $\delta_{Fm}$ für die lenkbaren Räder 5a, 5b unter Berücksichtigung eines Modells für den Anhängerbetrieb fortlaufend geregelt und über das Überlagerungslenksystem 1, d. h. über die Überlagerungsmittel 8 unabhängig von dem Fahrer eingestellt.

Die Aktivierung des erfindungsgemäßen Verfahrens erfolgt im vorliegenden Ausführungsbeispiel über die Erfassung des Einlegens des Rückwärtsgangs durch den Fahrer.

Nachstehend ist eine Differentialgleichung (1) bezüglich des Winkels $\gamma$ zwischen Kraftfahrzeug 13 und Anhänger 14 eines einfachen kinematischen Modells für den Anhängerbetrieb bzw. eines Zugmaschinen-Anhänger-Modells als Grundlage für den Entwurf von Reglerstrategien für das erfindungsgemäße Verfahren angegeben.

$$\dot{\gamma} = \left( \frac{v_x}{l_1} + \frac{v_x \cdot l_{12}}{l_1 \cdot l_2} \cdot \cos\gamma \right) \cdot \tan\delta_{Fm} - \frac{v_x}{l_2} \cdot \sin\gamma \quad (1),$$

wobei $\delta_{Fm}$ wie folgt begrenzt ist:

$$\left| \delta_{Fm} \right| \le B_{\delta_{Fm}},$$

und

wobei entsprechend Fig. 2:

- l₁ der Achsabstand des Kraftfahrzeugs 13,
- l₂ der Abstand zwischen der Radachse des Anhängers 14 bzw. in einem nicht dargestellten weiteren Ausführungsbeispiel im Falle mehrerer Achsen des Anhängers 14 einer virtuellen mittleren Achse des Anhängers 14 und dem Rotationspunkt bzw. der Kupplung 15 von Anhänger 14 und Kraftfahrzeug 13,
- l₁₂ der Abstand zwischen dem Rotationspunkt bzw. der Kupplung 15 von Anhänger 14 und Kraftfahrzeug 13 und der hinteren Radachse des Kraftfahrzeugs 13 oder im Falle mehrerer Achsen einer virtuellen mittleren Achse, und
- v_x die Fahrzeuggeschwindigkeit in Längsrichtung des Kraftfahrzeugs 13 ist.

Die kinematische Differentialgleichung (1) kann in eine kinetische Differentialgleichung überführt werden, wenn zusätzlich Feder- und Dämpfkräfte im System berücksichtigt werden. Derartige Kräfte treten u. a. in der Kupplung 15 zwischen Anhänger 14 und Kraftfahrzeug 13 sowie in den Fahrzeugreifen auf. Des weiteren könnte auch der Radschlupf berücksichtigt werden.

Der Winkel γ zwischen der Längsachse des Anhängers 14 und der Längsachse des Kraftfahrzeugs 13 wird kontinuierlich mit einem Sensor 16 erfasst.

Zur Regelung kommen mehrere Strategien in Frage. Der Lenkradwinkel bildet jedoch das Referenzsignal. Eventuell wird dieser durch einen Faktor k oder eine Funktion f der jeweiligen Situation angepasst. Nähere Details zu den Regelungsstrategien sind in "Glad, T., Ljung, L., Control Theory-Multivariable and Nonlinear Methods, Taylor and Francis, London, New York 2000" beschrieben.

Eine erste Möglichkeit stellt die Regelung des Winkels γ zwischen der Längsachse des Kraftfahrzeugs 13 und der Längsachse des Anhängers 14 dar, d. h. der Winkel γ zwischen der Längsachse des Anhängers 14 und der Längsachse des Kraftfahrzeugs 13 wird als Regelgröße eingesetzt.

Da das vorstehend beschriebene Modell für den Anhängerbetrieb nicht-linear ist, wurde ein Regler nach dem Verfahren der exakten Linearisierung entworfen. Der Winkel γ zwischen der Längsachse des Anhängers 14 und der Längsachse des Kraftfahrzeugs 13 wird im Bereich der Anhängerkupplung 15 gemessen und von dem Regler mit dem gewünschten Winkel, d. h. dem Referenzsignal $r_\gamma$, welches sich aus dem modifizierten Lenkradwinkel $\delta_S$ ergibt, vergli-chen. Die folgende Reglergleichung (2) ist ein Beispiel für den Fall der Verwendung eines Proportionalreglers (P-Regler).

$$\tan\delta_{Fm} = \frac{-K_P \cdot (r_\gamma - \gamma) + \dfrac{1}{l_2} \cdot \sin\gamma}{\dfrac{1}{l_1} + \dfrac{l_{12}}{l_1 \cdot l_2} \cdot \cos\gamma} \quad (2),$$

wobei $r_\gamma$ das Referenzsignal mit $r_\gamma = k \cdot \delta_S$ bzw. $r_\gamma = f(\delta_S)$ und $K_P$ eine Reglerkonstante ist.

Eine weitere Regelungsmöglichkeit besteht darin, die Position des Anhängers 14 im Raum oder den gewünschten Fahrradius $R_T$ zu regeln. Ein Quotient q des Fahrradius $R_T$ kann wie folgt beschrieben werden:

$$q = \frac{l_2}{R_T} = \frac{l_1 \cdot \sin\gamma - l_{12} \cdot \tan\delta_{Fm} \cdot \cos\gamma}{l_1 \cdot \cos\gamma + l_{12} \cdot \tan\delta_{Fm} \cdot \sin\gamma}.$$

Durch Umrechnung ergibt sich der mittlere Vorderradwinkel $\delta_{Fm}$ zu:

$$\delta_{Fm} = B_{\delta_{Fm}}, \text{ falls } \quad r_q \geq \frac{l_1 \cdot \tan\gamma - l_{12} \cdot \tan B_{\delta_{Fm}}}{l_1 + l_{12} \cdot \tan\gamma \cdot \tan B_{\delta_{Fm}}},$$

$$\delta_{Fm} = -B_{\delta_{Fm}} \text{ , falls } \quad r_q \leq \frac{l_1 \cdot \tan\gamma + l_{12} \cdot \tan B_{\delta_{Fm}}}{l_1 - l_{12} \cdot \tan\gamma \cdot \tan B_{\delta_{Fm}}} \text{ ,}$$

wobei $B_{\delta_{Fm}}$ der Maximalwinkel ist, bei welchem der Anhänger noch beeinflusst werden kann. In allen anderen Fällen gilt:

$$\delta_{Vm} = \arctan\left(\frac{l_1}{l_{12}} \cdot \frac{\tan\gamma - r_q}{1 + r_q \cdot \tan\gamma}\right) \text{ (3),}$$

wobei $r_q$ das Referenzsignal mit $r_q = k \cdot \delta_S$ bzw. $r_q = f(\delta_S)$ ist. Falls der Maximalwinkel $B_{\delta_{Fm}}$ erreicht wird, kann der Fahrer eine Warnung (z. B. Lampe oder sonstiges Signal) erhalten und erkennt dadurch, dass er wieder vorfahren muss.

Aus dem mittleren Vorderradwinkel $\delta_{Fm}$ kann nun über die Lenkgeometriebeziehung des Überlagerungslenksystems 1 bzw. ein hinterlegtes Kennfeld oder dergleichen auf den zu stellenden Sollwert des Stellwinkels $\delta_{Md}$ geschlossen werden.

In weiteren Ausführungsbeispielen könnten auch Kaskadenregler zum Einsatz kommen, wodurch unterschiedliche Reglerkonstellationen gebildet werden können.

Da der Lenkradwinkel $\delta_S$ das Referenzsignal darstellt, ergibt sich bei einem Eingriff des Überlagerungslenksystems 1 eine Rückkopplung auf die Lenkhandhabe bzw. das Lenkrad 2, falls nur ein Lenkaktuator (z. B. die Überlagerungsmittel 8) isoliert verwendet wird. Dies äußert sich in für den Fahrer spürbaren Momenten am Lenkrad 2. Des weiteren kann das System unter gewissen Bedingungen instabil werden, da das Lenkrad 2 selbst die Wunschvorgabe des Fahrers an das System darstellt.

Es ist denkbar, die Regelung hinsichtlich der Rückkopplung auf die Lenkhandhabe 2 zu optimieren, d. h. eine optimale Regelung durchzuführen. Dabei versucht der Regler, nicht nur die Differenz zwischen dem gewünschten Referenzsignal und dem gemessenen Signal zu minimieren, sondern auch gleichzeitig die Rückkopplung auf das Lenkrad 2 zu minimieren und dadurch dass System stabil zu halten. Die zu regelnde Differenz kann sich hier auf den Winkel $\gamma$ zwischen Anhänger und Kraftfahrzeug oder auf den Fahrradius $R_T$ beziehen.

Die Stabilität des Systems ist gewährleistet, wenn invertiert gelenkt wird. Falls eine Linkskurve gewünscht ist, muss nach rechts gelenkt werden und umgekehrt. Das invertierte Lenken kann lokal angewendet werden. Dies könnte über eine sägezahnförmige oder sinusförmige Funktion realisiert werden.

Ferner könnte zur Reduzierung der Rückkopplung auf das Lenkrad 2 ein Tiefpassfilter auf das Referenzsignal angewendet werden. Sonach kann die Lenkradwinkelgeschwindigkeit reduziert werden, um das Lenkradmoment zu begrenzen und die Rückkopplung zu reduzieren. Des weiteren könnten auch hohe Derivate im Regler (sogenannter D-Anteil) bestraft werden.

Um die Rückkopplung weiter zu reduzieren, kann auch ein Teil des Überlagerungslenksystems 1 bzw. bei Vorhandensein mehrerer Lenkaktuatoren (nicht dargestellt) einer der Lenkaktuatoren des Überlagerungslenksystems 1 eingesetzt werden. Beispielsweise kann bei einer Kombination aus dem Überlagerungslenksystem 1 und einem EPS-Lenksystem oder einem Handmomentensteller bzw. bei Einsatz eines Steer by Wire-Lenksystems der Einfluss der Winkelüberlagerung vollständig beseitigt werden. Das EPS-Lenksystem lenkt hierbei die Räder 5a, 5b, während das Überlagerungslenksystem 1 den Winkelausgleich herstellt.

In einem weiteren nicht dargestellten Ausführungsbeispiel könnte auch vorgesehen sein, dass die Länge des Anhängers 14 während der Fahrt geschätzt wird. Dazu ist jedoch eine Kurvenfahrt nötig. Dann könnte der Anhänger 14 frei gewechselt werden, ohne dass dessen Ausmaße erfasst werden müssen. Die Schätzung kann durch eine Minimierung eines Prädiktionsfehlers geschehen, z. B. auf Basis des Winkels $\gamma$ zwischen dem Anhänger 14 und dem Kraftfahrzeug 13.

Durch ein zusätzliches Messen der Kraft und/oder des Moments in der Anhängerkupplung 15, d. h. durch den Sensor 16, können die Regelungsstrategien dementsprechend erweitert werden (beispielsweise über Zustandsregler). Des weiteren kann durch die erweiterte Kraftmessung das Fahren gegen Hindernisse, wie beispielsweise andere Fahrzeuge oder Bordsteinkanten, erfasst werden. Diese Information kann in der Assistenzfunktion dafür genutzt werden, das Hindernis zu umfahren oder das Vorhandensein des Hindernisses dem Fahrer mittels einer Warnlampe oder einem Warnsignal anzuzeigen. Die Krafterkennung kann in den Regelungsstrategien auch als Information eines Bergauf- oder Bergabfahrens genutzt werden. Durch die Erfassung der Zugkraft an der Anhängerkupplung 15 kann der Fahrer über eine eventuelle Überladung des Anhängers 14 oder eine für die Zugmaschine 13 zu großen Anhängerlast informiert werden. Durch die Erfassung der Zugkraft kann der Radschlupf des Anhängers 14 geschätzt und ein realitätsgetreueres Fahrzeugmodell bzw. Modell für den Anhängerbetrieb eingesetzt werden.

Sollte das Kraftfahrzeug 13 über Abstandssensoren (nicht dargestellt) verfügen, können diese zusätzlichen Informationen in der Assistenzfunktion zur Vermeidung von Kollisionen mit Gegenständen genutzt werden. Ist der Anhänger 14 mit Abstandssensoren versehen, können diese ebenso zur Vermeidung von Kollisionen oder zum Erreichen eines vordefinierten Ziels (z. B. Parkplatz oder dergleichen) genutzt werden. Mit den Abstandssensoren des Kraftfahrzeugs 13 kann beim Rückwärtsfahren des Kraftfahrzeugs 13 (ohne Anhänger 14) die Assistenzfunktion, d. h. eine Ausführungsform des erfindungsgemäßen Verfahrens, das Anfahren an den Anhänger 13 und dessen Ankopplung über eine geometrische Erkennung der Kupplungsposition erleichtern.

Des weiteren besteht die Möglichkeit bei Vorhandensein eines GPS-Navigationssystems oder dergleichen, die Positionsinformationen zum Erreichen eines bestimmten Ziels zu verwenden und den Fahrerwunsch entsprechend zu korrigieren, beispielsweise, wenn festgestellt wird, dass sich das Gespann vor der Garage des Fahrers befindet und der Weg in die Garage bekannt ist.

**Patentansprüche**

1. erfahren zur Unterstützung des Fahrers eines Kraftfahrzeugs (13) im Anhängerbetrieb bei der Rückwärtsfahrt, wobei das Kraftfahrzeug (13) ein elektronisch geregeltes Servolenksystem (1) mit einer Lenkhandhabe (2) zur Vorgabe eines Lenkradwinkels ($\delta_S$) als Maß für einen gewünschten Lenkwinkel ($\delta_{Fm}$) für wenigstens ein lenkbares Rad (5a, 5b) des Kraftfahrzeugs (13) aufweist, und wobei während der Rückwärtsfahrt aus dem aktuell vorgegebenen Lenkradwinkel ($\delta_S$) als Referenzsignal entsprechend einer gewünschten Fahrtrichtung des Fahrers ein zugehöriger Lenkwinkel ($\delta_{Fm}$) für das wenigstens eine lenkbare Rad (5a,5b) unter Berücksichtigung eines Modells für den Anhängerbetrieb fortlaufend geregelt und über das elektronisch geregelte Servolenksystem (1) unabhängig von dem Fahrer eingestellt wird.

2. Verfahren nach Anspruch 1, **dadurch gekennzeichnet, dass** das elektronisch geregelte Servolenksystem (1) Überlagerungsmittel (8) aufweist, über welche der zugehörige Lenkwinkel ($\delta_{Fm}$) eingestellt wird.

3. Verfahren nach Anspruch 1 oder 2, **dadurch gekennzeichnet, dass** als Referenzsignal ein durch einen Faktor oder eine Funktion modifizierter Lenkradwinkel ($\delta_S$) verwendet wird.

4. Verfahren nach Anspruch 1, 2 oder 3, **dadurch gekennzeichnet, dass** der Winkel ($\gamma$) zwischen der Längsachse des Anhängers (14) und der Längsachse des Kraftfahrzeugs (13) kontinuierlich mittels eines Sensors (16) erfasst wird.

5. Verfahren nach einem der Ansprüche 1 bis 4, **dadurch gekennzeichnet, dass** als Regelgröße der Winkel ($\gamma$) zwischen der Längsachse des Anhängers (14) und der Längsachse des Kraftfahrzeugs (13) verwendet wird.

6. Verfahren nach einem der Ansprüche 1 bis 4, **dadurch gekennzeichnet, dass** als Regelgröße der Fahrradius verwendet wird.

7. Verfahren nach einem der Ansprüche 1 bis 6, **dadurch gekennzeichnet, dass** eine Kaskadenregelung verwendet wird.

8. Verfahren nach einem der Ansprüche 1 bis 7, **dadurch gekennzeichnet, dass** die Regelung hinsichtlich einer Rückkopplung auf die Lenkhandhabe (2) optimiert wird.

9. Verfahren nach einem der Ansprüche 1 bis 8, **dadurch gekennzeichnet, dass** zur Reduzierung einer Rückkopplung auf die Lenkhandhabe (2) ein Filter, insbesondere ein Tiefpassfilter auf das Referenzsignal angewendet wird.

10. Verfahren nach einem der Ansprüche 1 bis 9, **dadurch gekennzeichnet, dass** bei Vorhandensein mehrerer Lenkaktuatoren bei dem elektronisch geregelten Servolenksystem (1) wenigstens einer der Lenkaktuatoren zur Verminderung einer Rückkopplung auf die Lenkhandhabe (2) eingesetzt wird.

**11.** Verfahren nach einem der Ansprüche 1 bis 10,**dadurch gekennzeichnet, dass** zusätzlich die Kraft und/oder das Moment im Bereich der Anhängerkupplung (15) mittels eines Sensors (16) erfasst und in der Regelung berücksichtigt werden.

**12.** Computerprogramm mit Programmcodemitteln, um ein Verfahren zur Unterstützung des Fahrers eines Kraftfahrzeugs (13) im Anhängerbetrieb bei der Rückwärtsfahrt gemäß einem der Ansprüche 1 bis 11 durchzuführen, wenn dass Programm auf einem Mikroprozessor eines Computers, insbesondere auf einem Steuergerät (11) eines elektronisch geregelten Servolenksystems (1), ausgeführt wird.

**13.** Computerprogrammprodukt mit Programmcodemitteln, die auf einem computerlesbaren Datenträger gespeichert sind, um ein Verfahren zur Unterstützung des Fahrers eines Kraftfahrzeugs (13) im Anhängerbetrieb bei der Rückwärtsfahrt gemäß einem der Ansprüche 1 bis 11 durchzuführen, wenn dass Programm auf einem Mikroprozessor eines Computers, insbesondere auf einem Steuergerät (11) eines elektronisch geregelten Servolenksystems (1), ausgeführt wird.

**14.** Überlagerungslenksystem (1) eines Kraftfahrzeugs (13), miteiner Lenkhandhabe (2) zur Vorgabe eines Lenkradwinkels ($\delta_S$) als Maß für einen gewünschten Lenkwinkel ($\delta_{Fm}$) für wenigstens ein lenkbares Rad (5a,5b) des Kraftfahrzeugs (13),einem Lenkgetriebe (4), welches den Lenkradwinkel ($\delta_S$) in den Lenkwinkel ($\delta_{Fm}$) des wenigstens einen lenkbaren Rades (5a,5b) des Kraftfahrzeugs (13) umsetzt, undÜberlagerungsmitteln (8) zur Erzeugung eines Stellwinkels ($\delta_M$) durch einen Überlagerungswinkelsteller (9) und zur Erzeugung eines Eingangswinkels ($\delta_G$) des Lenkgetriebes (4) aus einer Überlagerung des Lenkradwinkels ($\delta_S$) mit dem Stellwinkel ($\delta_M$), wobei der Überlagerungswinkelsteller (9) über ein Steuergerät (11) angesteuert wird, und wobei auf dem Steuergerät (11) ein Verfahren zur Unterstützung des Fahrers des Kraftfahrzeugs (13) im Anhängerbetrieb bei der Rückwärtsfahrt gemäß einem der Ansprüche 1 bis 11 ausgeführt wird.

Fig. 1

Fig. 2

**Europäisches**
**Patentamt**

**EUROPÄISCHER RECHERCHENBERICHT**

Nummer der Anmeldung

EP 06 12 6100

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | "DEVICE TO ASSIST IN BACKING UP A TRAILER" RESEARCH DISCLOSURE, MASON PUBLICATIONS, HAMPSHIRE, GB, Nr. 323, 1. März 1991 (1991-03-01), Seite 211, XP000176306 ISSN: 0374-4353 * das ganze Dokument * | 1,3-9, 11-13 | INV. B62D13/06 |
| Y | ----- | 2,10,14 | |
| Y | US 2003/094329 A1 (OGAWA KENJI [JP] ET AL) 22. Mai 2003 (2003-05-22) * Zusammenfassung; Abbildung 1 * | 2,10,14 | |
| A | ----- | 1 | |
| P,X | US 2006/103511 A1 (LEE YONG H [US] ET AL) 18. Mai 2006 (2006-05-18) * Absätze [0015] - [0020], [0066]; Abbildungen 1,2 * ----- | 1-5, 12-14 | |

RECHERCHIERTE SACHGEBIETE (IPC)

B62D

Der vorliegende Recherchenbericht wurde für alle Patentansprüche erstellt

| Recherchenort | Abschlußdatum der Recherche | Prüfer |
|---|---|---|
| Den Haag | 9. Mai 2007 | Kulozik, Ehrenfried |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...............................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                EP 06 12 6100

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-05-2007

| Im Recherchenbericht angeführtes Patentdokument | Datum der Veröffentlichung | Mitglied(er) der Patentfamilie | Datum der Veröffentlichung |
|---|---|---|---|
| US 2003094329 A1 | 22-05-2003 | DE 10224758 A1 <br> JP 2003154951 A | 05-06-2003 <br> 27-05-2003 |
| US 2006103511 A1 | 18-05-2006 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 10336985 A1